# EUROPEAN PATENT APPLICATION

(11) **EP 2 081 095 A1**
(43) Date of publication of application: **22.07.2009**
(21) Application number: 09250090.9
(22) Date of filing: 14.01.2009
(51) Int. Cl.: G05B 19/418, F01D 5/00

(54) **Method of reverse engineering**

(30) Priority: 16.01.2008 US 14971
(71) Applicant: United Technologies Corporation, Hartford, CT 06101 (US)
(72) Inventor: Quinn, Daniel E., Windsor, Connecticut 06095 (US); Miller, Michael L., Euless, Texas 76039 (US)
(74) Representative: Leckey, David Herbert

(57) **Abstract**

An example method of reverse engineering component modifications includes recording identification information for components and distributing a portion of the components for modification. The method receives the components after modification and reviews the components using the identification information.

## Description

### BACKGROUND

This invention relates generally to reverse engineering component modifications, wherein identification information for a component is recorded prior to modifying the component.

As known, reverse engineering a component facilitates developing and refining other components. Companies within some industries reverse engineer competitor components to improve their own components. In addition to the overall component design, reverse engineering often helps improve component manufacturing systems and processes, for example. Although many companies find reverse engineering beneficial, reverse engineering can be expensive and time consuming. Expending too many resources reverse engineering may negate some of the benefits.

Companies within some industries, such as the aerospace industry, manufacture components that require periodic service, repair, or both. Gas turbine engines and other systems used within these industries often include many different components from many different companies.

Initially developing and manufacturing the components may result in particular knowledge that is useful when servicing and repairing the components. Thus, servicing and repairing systems typically involves distributing components within the system to the many different companies for service and repair. The component developing and manufacturing company is often also the component servicing and repairing company.

### SUMMARY OF THE INVENTION

An example method of reverse engineering component modifications includes recording identification information for components and distributing a portion of the components for modification. The method receives the components after modification and reviews the components using the identification information.

The example method of reverse engineering a component repair may include assuming control of a component, recording identification information for the component, and surrendering control of the component for a repair. The method then reassumes control of the component and evaluates the repair.

The example method of reverse engineering competitor repairs may also include identifying at least one potential repair on a part, recording information about the potential repair, and relying on a competitor to repair the potential repair. The method reviews the repaired part using the information.

### BRIEF DESCRIPTION OF THE DRAWINGS

The various features and advantages of this invention will become apparent to those skilled in the art from the following detailed description of an embodiment of the invention. The drawings accompanying the detailed description can be briefly described as follows:
Figure 1 shows a schematic sectional view of an example gas turbine engine;
Figure 2 shows the flow of an example method for reverse engineering components of the Figure 1 engine;
Figure 3 shows an example database for identifying components using the Figure 2 method; and
Figure 4 shows an example repair identified using the Figure 2 method.

### DETAILED DESCRIPTION OF AN EXAMPLE EMBODIMENT

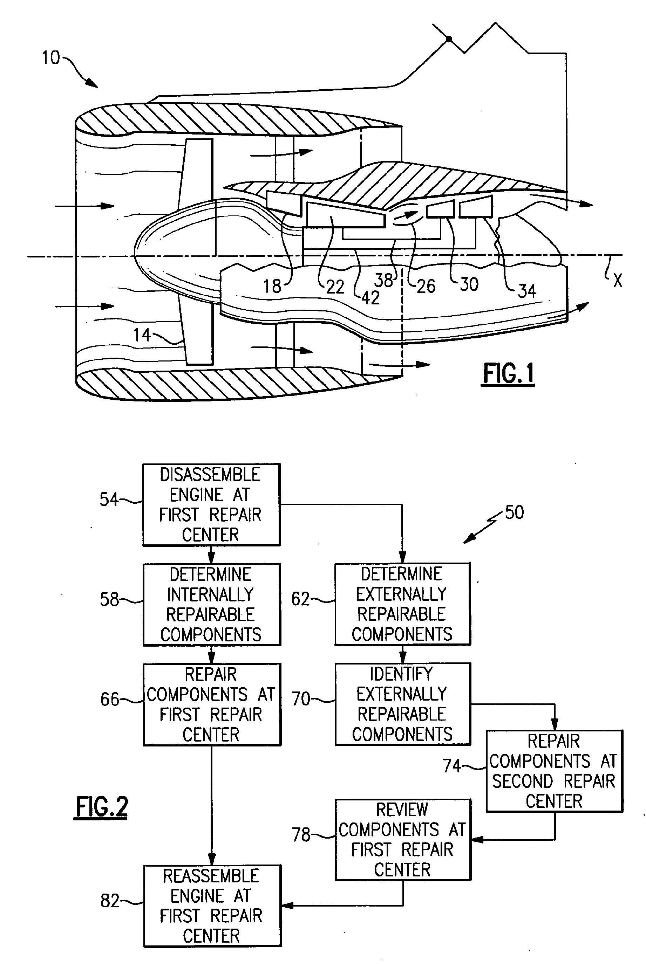

Figure 1 schematically illustrates an example gas turbine engine 10 including (in serial flow communication) a fan section 14, a low pressure compressor 18, a high pressure compressor 22, a combustor 26, a high pressure turbine 30, and a low pressure turbine 34. The gas turbine engine 10 is circumferentially disposed about an engine centerline X.

During operation, the compressors 18, 22 pressurize air that the fan section 14 pulls into the gas turbine engine 10. Pressurized air is then mixed with fuel and burned in the combustor 26. Hot combustion gases generated within the combustor 26 flow through high and low pressure turbines 30, 34, which extract energy from the hot combustion gases. The turbines 30, 34 utilize the extracted energy to power the high pressure compressor 22 and the low pressure compressor 18 through shafts 38,42.

Referring now to Figure 2 with continuing reference to Figure 1, the flow of an example reverse engineering method 50 includes disassembling the gas turbine engine 10 at a first repair center at 54 after the first repair center assumes control of components within the gas turbine engine 10. As known, repair centers often coordinate modifications, service, and repair of various types of gas turbine engines. Often, one or more manufacturers that produce engine 10 components also own or manage the repair center.

In this example, the method is used to reverse engineer components within the gas turbine engine 10. However, those skilled in the art and having the benefit of this description will understand that the method 50 would extend to other engines or assemblies for any application.

Disassembly separates components of the gas turbine engine 10 into a group of internally repairable components at 58 and a group of externally repairable components at 62. The internally repairable components at 58 may be retained for modification. In another example, the internally repairable components at 58 are distributed to a different company for modification. Disassembly often generates revenue for the repair center as owners of the engine 10 compensate the repair center for disassembling the engine 10.

Example criteria used when determining the internally repairable components at 58 includes determining whether a component can be modified, serviced, or repaired at the first repair center, or estimating whether the cost of modifying, servicing, or repairing a component at the first engine center would exceed a threshold value.

In this example, the low pressure compressor 18 is an internally repairable component at 58. Accordingly, modifications and repairs to the low pressure compressor 18 are made at the first repair center at 66. Example modifications and repairs include replacing worn blade tips within the low pressure compressor 18.

Because repairing or otherwise modifying components of the engine 10 generates revenue for the repair center, many repair centers desire to repair as many components as possible at the repair center.

In this example, the externally repairable components include the high pressure turbine 30. The first repair center may lack knowledge to profitably repair the high pressure turbine 30 as a manufacturer of the high pressure turbine 30 was not associated with the first repair center, for example. Lacking such knowledge results in lost revenue for the first repair center.

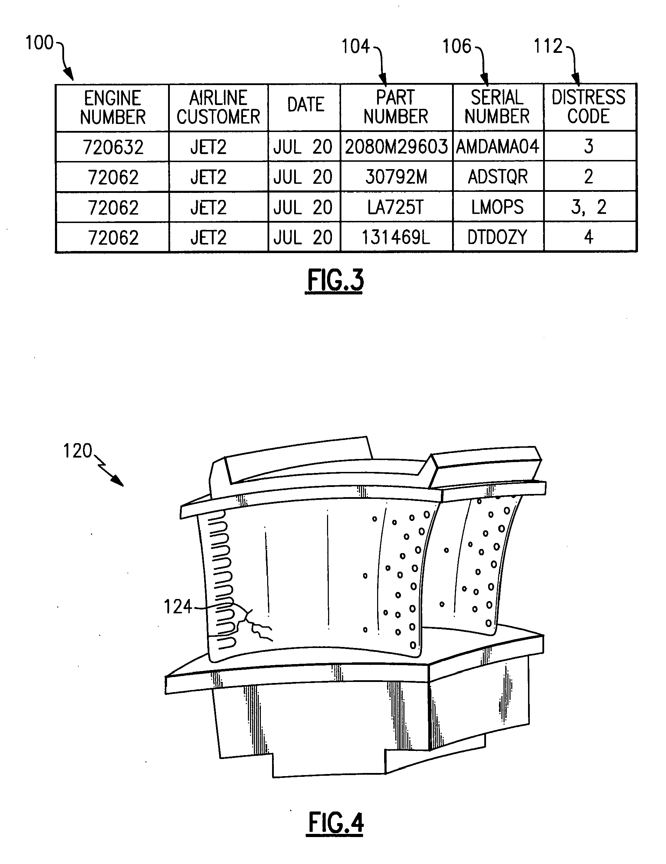

After determining the externally repairable components at 62, the method 50 identifies those components at 70. Figure 3 illustrates an example database 100 used for recording identification information for the component and for compiling data to identify the externally repairable components. As shown, the example database 100 includes a part number 104, a serial number 108, and a distress code 112, which corresponds to a key detailing a needed repair. For example, if the database 100 notes "3" as the distress code 112, the key would indicate that the needed repair is an outwardly bulging or inward collapsing airfoil. A user of the method 50 would know how to associate particular distress codes 112 with certain repairs. The convention for associating the distress code 112 with the repair is developed by the user in one example.

The database also links to a recorded photograph 120 for identifying the externally repairable components, as shown in Figure 4. The photographed component corresponds to the appropriate part number 104 within database 100 in a known manner, such as by a hyperlink connection for example. The photograph 120 provides visual detail relating to the area needing repair 124. Recording information about the at least one potential repair may utilize comparisons between the eventual repaired component and the photograph 120.

Referring again to Figures 1 and 2, the externally repairable components move to a second repair center at 74. Once repaired, the externally repairable components return to the first repair center for evaluation and review at 78. Accordingly, after assuming control of the engine at 54, the first repair center surrenders control of the externally repairable component to the second repair center at 74. The first repair center then reassumes control of the externally repairable components after repair at the second repair center at 78. Evaluations of the repairs may take place at the first repair center. The database 100 (Figures 3 and 4) facilitates evaluating and reviewing the newly repaired part because the information in the database can be compared to the repaired part, including the photographed part prior to repair. Evaluation and review at 78 may include noting repair techniques utilized by the second repair center. Destructive and nondestructive testing may help analyze such techniques.

Evaluation and review of repairs at 78 may result in altered repair procedures by the manufacture associated with the first repair center, which potentially increases the number of repairable components at 58 for that manufacturer. As an example, altered repaired procedures may change the criteria used to determine the internally repairable components at 58. Future repair procedures may involve retaining more internally repairable components at 58 based upon reviewing the components at 78 after modification. The identification information facilitates the review. More internally repairable components at 58 increases revenue for the first repair center. Future procedures, repairs or other modifications at 74 can be altered based upon reviewing the components at 78 after modification. In one example, based upon reviewing the components at 78, more components may be retained by the first repair center in future methods. In another example, repair or modification procedures are altered at the first repair center based upon reviewing the components at 78.

After review, both the internally repairable components and the externally reparable components reviewed are reassembled within the within the engine at 82 at the first repair center.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of reverse engineering component modifications, comprising
(a) recording identification information for a plurality of components;
(b) distributing a first portion of the plurality of components for modification;
(c) receiving the first portion of the plurality of components after modification; and
(d) reviewing the first portion of the plurality of components after modification using the identification information.

2. The method of claim 1, including the step of:
retaining a second portion of the plurality of components for modification.

3. The method of claim 1 or 2, including the step of:
repeating steps (a) through (c) and retaining types of components that would previously have been in the first portion in the second portion based on a prior said step (d).

4. The method of claim 2 or 3, including the step of:
(f) altering modifications to the second portion of the plurality of components based on said step (d).

5. The method of any preceding claim, wherein said step (b) includes distributing the first portion of the plurality of components to a different company for modification.

6. The method of any preceding claim, wherein the identification information includes at least one of a photograph (120), a part number (104), and a serial number (108).

7. The method of any preceding claim, wherein the modification of step (b) comprises a repair.

8. The method of any preceding claim, wherein said step (d) includes at least one of destructive testing and nondestructive testing.

9. A method of reverse engineering a component repair, comprising
(a) assuming control of a component;
(b) recording identification information for the component;
(c) surrendering control of the component for a repair;
(d) reassuming control of component; and
(e) evaluating the repair.

10. The method of claim 9, including the step of:
retaining control of or altering a repair to another component for repair based on said step (e).

11. The method of any preceding claim, wherein the component or components comprises a gas turbine engine component or components.

12. A method of reverse engineering competitor repairs, comprising:
(a) identifying at least one potential repair on at least one part;
(b) recording information about the at least one potential repair;
(c) relying on a another company to repair the at least one potential repair; and
(d) reviewing the repair to the at least one part using the information.

13. The method of claim 12, wherein said step (b) includes recording a photograph (120) of the at least one potential repair.

14. The method of claim 13, wherein said step (b) includes comparing the repair to the photograph (120).

15. The method of claim 12, 13 or 14, wherein said step (d) includes testing repairs to the component.
